(19) Europäisches Patentamt
European Patent Office
Office européen des brevets

(11) Publication number: 0 373 925 A2

# (12) EUROPEAN PATENT APPLICATION

(21) Application number: 89313054.2

(22) Date of filing: 13.12.89

(51) Int. Cl.5: C08F 8/14, C08F 8/30, C09D 145/00

(30) Priority: 14.12.88 JP 313761/88

(43) Date of publication of application: 20.06.90 Bulletin 90/25

(84) Designated Contracting States: DE FR GB

(71) Applicant: NIPPON OIL CO. LTD.
3-12, Nishi Shinbashi 1-chome
Minato-ku Tokyo(JP)

(72) Inventor: Suzuki, Akinori
6-6, Shinkawadori Kawasaki-ku
Kawasaki-shi Kanagawa-ken(JP)
Inventor: Tsuchiya, Shozo
2-10-8, Minami Meguro-ku
Tokyo(JP)
Inventor: Sasaki, Makoto
338, Iwai-cho Hodogaya-ku
Yokohama-shi Kanagawa-ken(JP)

(74) Representative: Myerscough, Philip Boyd et al
J.A.Kemp & Co. 14, South Square Gray's Inn
London, WC1R 5EU(GB)

## (54) Curing resin and curing resin-composition.

(57) A curing resin obtained in the following manner, 100 parts by weight of at least one material (component A) selected from the group consisting of a five-membered cyclic compound having conjugated double bonds which is represented by the general formula:

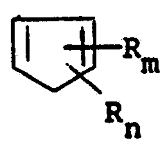

wherein R represents alkyl having 1 to 3 carbon atoms, and m and n stand for 0 or for an integer of 1 to 6 and m + n = 6,
and addition products thereof formed by the Diels-Alder reaction, 0 to 50 parts by weight of an aromatic compound (component A′) having at least one polymerizable carbon-carbon double bond and 2 to 120 parts by weight of a compound (component B) having at least one polymerizable carbon-carbon double bond and at least one hydroxy group are polymerized under heating; the obtained cyclopentadiene resin (R1) having hydroxy groups and/or the resin (R1′) having hydroxy groups obtained by selective hydrogenation of only the double bonds in the said resin (R1) is reacted with a polyisocyanate compound (component C) at an equivalent ratio of the isocyanate groups in the component C in the range of 0.02 to 0.95 based on the hydroxy groups in the resin R1 and/or R1′; the thus obtained resin (R2) is then esterified with an α,β-unsaturated carboxylic acid (component D) at an equivalent ratio of carboxyl groups in the component D in the range of 0.1 to 1.1 based on the hydroxy groups in the resin (R2).

EP 0 373 925 A2

Xerox Copy Centre

## CURING RESIN AND CURING RESIN-COMPOSITION

The present invention relates to a novel curing resin. More particularly, the present invention relates to a novel curing resin and a curing resin-composition thereof which will be cured by irradiation with ultraviolet rays and electron rays and which are useful for printing inks and paint binders in particular.

A radiation curing resin which will be cured by irradiation with ultraviolet rays and electron rays, etc. has been developed in fields such as printing inks, paints and adhesives because it has the remarkable and advantageous characteristics such as rapid cure properties, energy-saving properties and low public pollution properties.

A curing resin is used by blending a radical polymerization monomer, usually one such as trimethylolpropane triacrylate with a radical polymerization initiator and a pigment, etc. according to necessity.

The radiation curing resin is an especially important component of printing inks and paints since it has a predominant effect on various properties such as curing speed, viscosity and coating characteristics.

A multifunctional oligomer, as a radiation curing resin, such as epoxy acrylate, urethane acrylate, alkyd and polyester acrylate is employed. However, such a radiation curing resin having all three properties relating to curing properties, coating characteristics and adhesion has not been previously known. For example, epoxy acrylate and urethane acrylate have high viscosities for their molecular weight and the viscosities change greatly according to the temperature because of strong hydrogen bonds. Also, when they are used for printing inks, the dispersibility of pigments is low. Moreover, epoxy acrylate has a high hydrophilic property and, for example, when it is used for printing inks the emulsion property is bad because it has the same number of hydroxy groups as one of acryloxy group in the resin. Polyester acrylate is slow to be cured.

In Japanese Laid-open Patent Publication No. 124133/1974 there is described a resin obtained by esterification of DCPD-allyl alcohol copolymer with acrylic acid or methacrylic acid. This resin has good adhesion but a bad curing property. When it is used for printing inks it has a defect in that a lot of misting.

In particular, recently a productivity increase as well as improvements in characteristics of resin is strongly required. However, it is difficult for previous multifunctional oligomer-type resins to satisfy this requirement. Therefore, a development of a novel radiation curing resin is required which can cure rapidly, form excellent coating. and achieve a high productivity.

It is an object of the present invention to provide a radiation curing resin which doesn't have the defects of those previously used, is suitable for printing inks and paint binders and has excellent curing properties, coating characteristics, adhesion of coating and productivity.

As a result of intensive study by the present inventors to resolve the above-mentioned defects, it has been found that these defects are resolved by a curing resin (R3) obtained in the following manner, 100 parts by weight of at least one material (component A) selected from the group consisting of a five-membered cyclic compound having conjugated double bonds which is represented by the general formula:

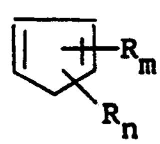

wherein R represents alkyl having 1 to 3 carbon atoms, and m and n stand for 0 or for an integer of 1 to 6 and $m+n = 6$,
and addition products thereof formed by the Diels-Alder reaction, 0 to 50 parts by weight of an aromatic compound (component A′) having at least one polymerizable carbon-carbon double bond and 2 to 120 parts by weight of a compound (component B) having at least one polymerizable carbon-carbon double bond and at least one hydroxy group are polymerized under heating; the obtained cyclopentadiene resin (R1) having hydroxy groups and/or the resin (R1′) having hydroxy groups obtained by selective hydrogenation of only the double bonds in the said resin (R1) is reacted with a polyisocyanate compound (component C) at an equivalent ratio of the isocyanate groups in the component C in the range of 0.02 to 0.95 based on the hydroxy groups in the resin R1 and/or R1′; the thus obtained resin (R2) is then esterified with an $\alpha,\beta$-unsaturated carboxylic acid (component D) at an equivalent ratio of carboxyl groups in the component D in the range of 0.1 to 1.1 based on the hydroxy groups in the resin (R2). In this manner the curing resin of the present invention is formed.

In this invention examples of a component A having the above-mentioned general formula are

cyclopentadiene and methylcyclopentadiene, etc., and examples of a component A which is an addition product formed by the Diels-Alder reaction are dicyclopentadiene, cyclopentadiene-methylpentadiene-Diels-Alder codimerization products and tricyclopentadiene, etc. From the point of industrial use the mixture thereof is used preferably. Especially preferred are cyclopentadiene, dicyclopentadiene and the mixture thereof.

High purity cyclopentadiene, dicyclopentadiene or alkyl-substituted derivatives thereof is not always necessary. However, not less than 80 % purity of these compounds is preferred. Also, a condensed fraction is usable obtained by eliminating most of the $C_5$ components such as $C_5$ olefin and $C_5$ paraffin by distillation from the mixture of dicyclopentadiene, dimethylcyclopentadiene, cyclopentadiene-methylcyclopentadiene codimer, cyclopentadiene-isoprene codimer and cyclopentadiene-piperylene codimer, etc., which mixture is obtained by heat dimerization of the cyclopentadiene and methylcyclopentadiene which are included in the $C_5$ fraction in the by-product oil obtained by high temperature thermal cracking of naphtha, etc.

In the production of the above cyclopentadiene resin (R1) including hydroxy groups if an aromatic compound (component A′) having polymerizable carbon-carbon double bond is also used, the dispersibility of pigment in the printing ink improves and the luster of the printed matter increases when the resin of the present invention is used for preparation of a printing ink. The examples of component A′ are compounds having 8 to 20 carbon atoms such as styrene, α-methylstyrene, vinyltoluene, indene and methylindene or a mixture thereof. From an industrial point of view, for example, the $C_9$ fraction which is produced as a by-product at the time of cracking of naphtha, etc. is preferably used.

Component B, which is a compound having both at least one polymerizable double bond and at least one hydroxy group in the molecule, includes unsaturated compounds having hydroxy groups which are heat-copolymerizable with component A, preferably having 3 to 22 carbon atoms, which are unsaturated alcohols such as allyl alcohol, methallyl alcohol, crotyl alcohol, cinnamyl alcohol, methyl vinyl carbinol, allyl carbinol and methyl propenyl carbinol, etc.; unsaturated dihydric alcohols such as 2-butene-1,4-diol and 3-hexene-2,5-diol, etc.; hydroxy alkyl acrylate such as 2-hydroxy ethyl acrylate and 2-hydroxy propyl acrylate, etc. and hydroxy methacrylates such as 2-hydroxy propyl methacrylate, etc., and a mixture of more than one of the above compounds.

The cyclopentadiene resin used in this invention can be prepared by reacting 2 to 120 parts by weight, preferably 5 to 100 parts by weight, of component B with 100 parts by weight of component A under heating at a temperature from 150 to 300 °C, preferably 200 to 280 °C, for from 10 minutes to 20 hours, preferably from 1 hour to 10 hours, without catalyst.

As for the resin R3 of this invention, the ratio of component B based on component A in the copolymerization reaction for the preparation for the resin R3 is very important. This is why in the case of less than 2 parts by weight of component B based on 100 parts by weight of component A, curing of the resin is not sufficient, and in the case of more than 120 parts by weight of component B, the yield of cyclopentadiene resin having hydroxy groups (R1) becomes much lower and the coating characteristics are worsened very much as well as the fact that the softening point of the resin becomes lower.

The cyclopentadiene resin (R1) having hydroxy groups obtained in the above way may be reacted, as it is, with component C which is a polyisocyanate compound. However, the cyclopentadiene resin (R1) has a strong smell and is quite colored because it has many double bonds. Therefore, the resin (R1′) which is improved in respect to smell and color can be obtained if only the double bonds in the resin (R1) are hydrogenated without decreasing the number of hydroxy groups in the resin (R1).

According to the present invention the condition for hydrogenation of the resin (R1) is necessary to be selected carefully in order to hydrogenate only the carbon-carbon double bonds in the resin without decreasing the number of hydroxy groups in the resin.

That is to say, conditions for hydrogenation under which it is more difficult to hydrogenate hydroxy groups and easier to hydrogenate double bonds should be adopted. For example, when noble catalysts such as platinum, palladium, etc. are used for catalysts for hydrogenation, hydrogenation can be carried out under the broad condition from room temperature to 250 °C and from atmospheric pressure to 100 $kg/cm^2$.

In the case that catalysts other than noble catalysts such as nickel and copper-chromium are used, the reaction is necessary to be carried at as low a temperature as possible and a temperature of not more than 200 °C is preferred. If the reaction temperature exceeds 200 °C, the hydroxy group content in the resin (R1′) is apt to decrease because of dehydration reaction occurring at the same time as that of hydrogenation of carbon-carbon double bonds. Therefore, such condition is not preferred.

The polyisocyanate compound of component C is one having more than one isocyanate group in the molecule. Examples are aliphatic polyisocyanate, alicyclic polyisocyanate, heterocyclic polyisocyanate or aromatic polyisocyanate. Examples are butylene-1,4-diisocyanate, ethylene diisocyanate, trimethylene

diisocyanate, tetramethylene diisocyanate, hexamethylene diisocyanate, cyclohexylene-1,2-diisocyanate, cyclohexylene-1,4-diisocyanate, 2,4-tolylene diisocyanate, 2,6-tolylene diisocyanate, 1,4-phenylene diisocyanate, 1,4-naphthalene diisocyanate, 1,5-naphthalene diisocyanate, 4,4′-diphenylmethane diisocyanate, diphenyl-3,3′-dimethyl-4,4′-diisocyanate, xylene diisocyanate, 1-methoxy-phenylene-2,4-diisocyanate, benzene-1,2,4-triisocyanate, tolidene diisocyanate, isophorone diisocyanate, etc.

A mixture of more than one of these isocyanates can be used. Normally, those having 4 to 30 carbon atoms are employed.

The reaction between the cyclopentadiene resin having hydroxy groups (R1 or R1′) and the polyisocyanate compound which is component C is carried out at the temperature of from 20 to 280° C, preferably from 30 to 260° C, for 10 minutes to 20 hours, preferably 30 minutes to 15 hours.

The amount of polyisocyanate to be used in the reaction is in the range of from 0.02 to 0.95, preferably from 0.05 to 0.9, of isocyanate group equivalent based on the equivalent of hydroxy groups in the cyclopentadiene resin having hydroxy groups (R1 or R1′).

If the amount of polyisocyanate compound is less than 0.02 of said equivalent ratio there is little effect whcih makes the resin (R1 or R1′) of higher molecular weght and the curing speed is slow. Also, if the equivalent ratio exceeds 0.95, since residual hydroxy group content of the resin (R2) is too little, the esterification reaction of α,β-unsaturated carboxylic acid, which is component D, with the resin (R2) scarcely proceeds, the function as a curing resin disappears and the solubility with reactive diluents also worsen.

The curing resin of the present invention, then, is obtained by esterification of the hydroxy groups in the resin (R2) with the carboxyl group in the α,β-unsaturated carboxylic acid, reacting the resin (R2) obtained in the above-mentioned way with α,β-unsaturated carboxylic acid which is component D under the conditions of the usual and conventionally known esterification reaction per se.

Examples of the α,β-unsaturated carboxylic acid, which is component D, which are to be used in the above reaction are compounds having 3 to 20 carbon atoms and carbon-carbon double bond in the α,β position of the carboxyl group such as acrylic acid, methacrylic acid, crotonic acid, sorbic acid and cinnamic acid, etc. And, a mixture of more than one of these compounds can be used also.

The prescribed object of the present invention is achieved by reacting the resin (R2) with the α,β-unsaturated carboxylic acid at an equivalent ratio of α,β-unsaturated carboxylic acid of from 0.1 to 1.1, preferably from 0.5 to 1.1, based on the amount of hydroxy groups in the resin (R2). However, in order to substantially perfect the esterification, it is more preferred to use a sufficient amount of α,β-unsaturated carboxylic acid.

In this case, if the amount of the α,β-unsaturated carboxylic acid is in less than 0.1 of the equivalent ratio, this is not preferred because the curing rate of the esterification-denatured resin is slow.

The curing resin of the present invention is most suitable for use for an irradiation curing resin composition. In general, according to each use, the viscosity is adjusted and diluents are compounded in order to adjust the character and curing rate of the curing composition.

For these diluents, various kinds of known solvents can be used, in particular in order to make the curing rapid and easy it is preferred that reactive diluents which as described below should be used. For reactive diluents to be used in the present invention, one or more than one of a mixture of compounds having reactive double bonds which can effect a crosslinking reaction with the curing resin of the present invention by irradiation using radiation such as ultraviolet rays or electron beams or by heating. For this reactive solvent, acrylic acid derivatives or vinyl compounds such as styrene are preferably used, particularly acrylic acid derivatives are the most suitable. Examples of these compounds are one functional monomers such as methyl(meth)acrylate, ethyl(meth)acrylate, propyl(meth)acrylate, allyl(meth)acrylate, butyl(meth)acrylate, amyl(meth)acrylate, hexyl(meth)acrylate, octyl(meth)acrylate, capryl(meth)acrylate, decyl(meth)acrylate, lauryl(meth)acrylate, myristyl(meth)acrylate, cetyl(meth)acrylate, stearyl(meth)acrylate, benzyl(meth)acrylate, methacrylate of alkylene oxide addition products of alkylphenol, such as phenoxyethyl(meth)acrylate, cyclohexyl(meth)acrylate, dicyclopentenyl(meth)acrylate, dicyclopentenyloxyalkyl(meth)acrylate, etc. Examples of more than one functional monomers are crosslinking solvents having acrylic or methacrylic residual groups such as ethylene glycol, di(meth)acrylate, diethylene glycoldi(meth)acrylate, triethylene glycoldi(meth)acrylate, polyethylene glycoldi(meth)acrylate, propylene glycoldi(meth)acrylate, dipropylene glycoldi(meth)acrylate, tripropylene glycoldi(meth)acrylate, butylene glycoldi(meth)acrylate, pentyl glycoldi(meth)acrylate, neopentyl glycoldi(meth)acrylate, hydroxypivalic acid neopentyl glycol ester di(meth)acrylate, butane dioldi(meth)acrylate, hexane diol(meth)acrylate, (di)glycerol poly(meth)acrylate, (di)glycerol alkylene oxide poly(meth)acrylate, methacrylate of dihydroxymethyl-tricyclo[5.2.1.$0^{2,6}$]decene, trimethylolpropane tri(meth)acrylate, trimethylolpropane alkylene oxide tri(meth)acrylate, ditrimethylol propane tetra(meth)acrylate, ditrimethylol propane alkylene oxide tetra-(meth)acrylate, trimethylol ethane tri(meth)acrylate, ditrimethylolethane(meth)acrylate, trimethylolethane alkylene oxide tri(meth)acrylate, ditrimethylolethane alkylene oxide tetra(meth)acrylate, tetramethylolmethane tetra(meth)acrylate, dipentaerythritol hexa(meth)acrylate, pentaerythritol triacrylate, pentaerythritol tetracrylate, tris(acryloyloxyethyl)tri(meth)acrylate, bisphenol A alkylene oxide di(meth)acrylate, bisphenol F alkylene oxide di(meth)acrylate, etc.

The amount of dilution solvent to be used is 10 to 95 parts by weight, preferably 20 to 90 parts by weight, based on 90 to 5 weight parts of the curing resin (R3).

If the amount of dilution solvents used exceeds 95 parts by weight, there is little effect of using the curing resin (R3) and sufficient curing property is not obtained. If dilution slvents is used in the amount of less than 10 parts by weight, workability is bad because the viscosity is too high and in the case of use for printing ink the dispersibility of pigment becomes worse and the gloss becomes much worse.

The above curing resin can be suitably used for binder for printing inks and for paints. As occasion demands, various kinds of pigments, fillers and additives such as heating polymerization inhibitors, leveling agents and wax, etc. can be compounded with the curing resin.

In order to accelerate the curing still more, curing accelerators can be added and in many cases this is preferable. For such curing accelerators, when the above composition is cured by heating, organic peroxide independently or with decomposition accelerators is used, or certain kinds of ketone resins can be used as heating curing accelerators. Also, when the above composition is cured by the irradiation of ultraviolet rays, sensitizers such as various kinds of benzoin ether and benzophenone, etc. can be used for curing accelerators.

The above curing composition has an excellent property which makes the curing very rapid by crosslinking reaction by heating or radiation irradiation. Also, the cured film has excellent adhesion and high hardness, when it is used for binders for printing inks or paints, particularly excellent properties can be shown.

The following Examples specifically illustrate the present invention, but the invention is not limited thereto.

## EXAMPLE 1

Ninety-six percent purity dicyclopentadiene (660 g), allyl alcohol (300 g) and mixed xylene (500 g) obtained commercially were charged into an autoclave equipped with a stirrer, and then were reacted at the temperature of 260 °C for 5 hours. After the completion of the reaction, the autoclave was cooled, the contents were distilled, untreated monomer, low grade polymer and xylene were removed and 750 g of resin (I) was obtained.

This resin (I) (100 g) was dissolved in commercially available mixed xylene, palladium having a palladium concentration of 5 % (5 % Pd-C standard grade made by Nippon Engelhard Ltd.) (1 g) was added, a hydrogenation reaction was carried out under a hydrogen pressure of 30 kg/cm$^2$ at a temperature of 150 °C for about one hour, the solvent was removed and a hydrogenated resin (I′) was obtained.

Properties of the resin (I) and the resin (I′) are as follows:

| | Softening point | Bromine number | Hydroxy content | Hue (Gardner) |
|---|---|---|---|---|
| Resin (I) | 90 °C | 74 | 0.37 mol/100 g | 10 |
| Resin (I′) | 87 °C | 16 | 0.37 mol/100 g | 3 |

The obtained hydrogenated resin (I′) (100 g) was melted under heating of 140 °C, 9.3 g of hexamethylene diisocyanate [the isocyanate group equivalent ratio based on the amount of hydroxy in the resin (I′) was 0.3] was added dropwise and the reaction was carried out for three hours under the atmosphere of nitrogen.

It was made sure that there was no isocyanate group left by the analysis of infrared spectrum, and afterwards the reaction was completed. The softening point of the obtained resin (I′)-1 was 96 °C and the hydroxy content in the resin was 0.26 mol/100 g.

Next, 85 parts by weight of the resin (I′)-1, 15 parts by weight of acrylic acid, 1.0 part by weight of paratoluene sulfonic acid and 0.1 part by weight of hydroquinone were charged into a flask equipped with a condensor with sidearms and a stirrer. After the reaction under reflx by benzene/methyl isobotyl ketone

(MIBK) at a temperature of 100 °C for about 14 hours the resin (No. 1) was obtained by removing benzene and MIBK at a temperature of 120 °C.

EXAMPLE 2

One hundred grams of the resin (I) obtained in Example 1 was dissolved in 50 g of toluene, under stirring, 16.1 g of 2,4-tolylene diisocyanate [the isocyanate group equivalent ratio based on the amount of hydroxy in the resin (I) was 0.5] was added dropwise and the reaction was carried out at a temperature of 65 °C for 11 hours under an atmosphere of nitrogen. After it was made sure that there was no isocyanate group left by the analysis of infrared spectrum, the resin (I)-2 was obtained by removing toluene by distillation. The softening point was 110 °C and hydroxy content was 0.19 mol/100 g.

Next, 88 parts by weight of the resin (I)-2, 12 parts by weight of acrylic acid, 1.0 part by weight of paratoluene sulfonic acid and 0.1 part by weight of hydroquinone were reacted in the same way as in Example 1, and the resin (No. 2) was obtained.

EXAMPLE 3

One hundred grams of the resin (I′) obtained in Example 1 was dissolved in 50 g of toluene, under stirring, 25.8 g of 2,4-tolylene diisocyanate [the isocyanate group equivalent ratio based on the amount of hydroxy in the resin (I′) was 0.8] was added dropwise and the reaction was carried out at a temperature of 65 °C for 11 hours under an atmosphere of nitrogen. After it was made sure that there was no isocyanate group left by the analysis of infrared spectrum, the resin (I′)-3 was obtained by removing toluene by distillation. The softening point was 164 °C and hydroxy content was 0.07 mol/100 g.

Next, 95 parts by weight of the resin (I′)-3, 5 parts by weight of acrylic acid and 1.0 part by weight of paratoluene sulfonic acid were reacted in the same way as in Example 1, and the resin (No. 3) was obtained.

EXAMPLE 4

Ninety-six percent purity dicyclopentadiene (84 g), cis-2-butene-1,4-diol (56 g) and mixed xylene (60 g) were charged into an autoclave equipped with a stirrer, and then were reacted at a temperature of 260 °C for 5 hours. After the completion of the reaction, the autoclave was cooled, the contents was distilled, untreated monomer, low grade polymer and xylene were removed and 97 g of the resin (II) was obtained.

The softening point of the resin (II) was 117 °C, its hydroxy content was 0.49 mol/100 g, its bromine number was 78 and its hue (Gardner) was 11.

The obtained resin (II) (100 g) was melted under heating at 200 °C, 30.6 g of diphenylmethane diisocyanate [the isocyanate group equivalent ratio based on the amount of hydroxy in the resin (II) was 0.5] was added dropwise and the reaction was carried out at a temperature of 200 °C for 2 hours under an atmosphere of nitrogen.

It was made sure that there was no isocyanate group left by the analysis of infrared spectrum and afterwards the reaction was completed and the resin (II)-4 was obtained. The softening point was 138 °C and hydroxy content was 0.25 mol/100 g.

Next, 85 parts by weight of the resin (II)-4, 15 parts by weight of acrylic acid, 1.0 part by weight of paratoluene sulfonic acid and 0.1 part by weight of hydroquinone were reacted in the same way as in Example 1, and the resin (No. 4) was obtained.

EXAMPLE 5

A $C_5$ fraction (boiling point = 26 °C to 60 °C) produced by cracking of naphtha was heated at a temperature of 110 °C for 5 hours, the residue remaining after removal of $C_5$ fraction by distillation had 85 % of dicyclopentadiene (DCPD) and the others in it were codimers of cyclopentadiene and piperylene or isoprene, 155 g of this fraction including 85 % of DCPD, 58 g of allyl alcohol and 70 g of mixed xylene were charged into an autoclave equipped with a stirrer, were reacted under heating of 260 °C for 5 hours and 180 g of the resin (III) was obtained by removing unreacted materials, low grade polymers and

solvents. The softening point of the resin (III) was 85° C, its bromine number was 75, its hydroxy content was 0.36 mol/100 g and its hue (Gardner) was 10.

One hundred grams of the obtained resin (III) was dissolved in 75 g of xylene and hydrogenation reaction was carried out in the same manner as in Example 1. The obtained resin (III′) had 83° C of softening point, 19 of bromine number, 0.36 mol/100 g of hydroxy content and 3 of hue (Gardner).

100 g of the hydrogenated resin (III′) was dissolved in 50 g of toluene, under stirring, 22.5 g of diphenylmethane diisocyanate [the isocyanate group equivalent ratio based on the amount of hydroxy in the resin (III′) was 0.5] was added dropwise and the reaction was carried out at a temperature of 65° C for 11 hours under an atmosphere of nitrogen. After it was made sure that there was no isocyanate group left by the analysis of infrared spectrum, the resin (III′)-5 was obtained by removing toluene by distillation. The softening point of the resin (III′)-5 was 105° C and its hydroxy content was 0.18 mol/100 g.

Next, 88 parts by weight of the resin (III′)-5, 12 parts by weight of acrylic acid, 1.0 part by weight of paratoluene sulfonic acid and 0.1 part by weight of hydroquinone were reacted in the same way as in Example 1, and the resin (No. 5) was obtained.

## EXAMPLE 6

Ninety-six percent purity DCPD (92 g), 58 g of allyl alcohol, 71 g of the aromatic fraction having a boiling point range of 140° C to 280° C obtained by the thermal cracking of naphtha and 45 g of mixed xylene were chared into an autoclave, were reacted under heating of a temperature of 260° C for 6 hours and 175 g of the resin (IV) was obtained by removing unreacted materials, low grade polymers and solvents. This resin (IV) had 87° C of softening point, 72 of bromine number, 0.32 mol/100 g of hydroxy content and 11 of hue.

One hundred grams of the obtained resin (IV) was dissolved in 75 g of mixed xylene, 1 g of palladium carbon having 5 % palladium concentration (5 % Pd-C standard grade made by Nippon Engelhard Ltd.) was added, a hydrogenation reaction was carried out under a hydrogen pressure of 30 $k/cm^2$ at a temperature of 150° C for about 1.5 hours and a hydrogenated resin (IV′) was obtained by removing the solvents. The softening point was 85° C, the bromine number was 17, the hydroxy content was 0.32 mol/100 g and the hue (Gardner) was 4.

One hundred grams of the hydrogenated resin (IV′) was disssolved in 50 g of toluene, under stirring, 14.0 g of 2,4-tolylene diisocyanate [the isocyanate group equivalent ratio based on the amount of hydroxy in the resin (IV′) was 0.5] was added dropwise and the reaction was carried out at a temperature of 65° C for 11 hours under an atmosphere of nitrogen. After it was made sure that there was no isocyanate group left by the analysis of infrared spectrum, the resin (IV′)-6 was obtained by removing toluene by distillation. The softening point was 106° C and hydroxy content was 0.16 mol/100 g.

Next, 90 parts by weight of the resin (IV′)-6, 10 parts by weight of acrylic acid, 1.0 part by weight of paratoluene sulfonic acid and 0.1 part by weight of hydroquinone were reacted in the same way as in Example 1, and the resin (No. 6) was obtained.

(Evaluation of properties of the case in using the resin for infrared-curing ink)

## EXAMPLES 7 to 12

Each of resins No. 1, No. 2, No. 3, No. 4, No. 5 and No. 6 obtained in each of Examples 1 to 6, trimethylolpropane triacrylate, carmine 6B, irgacure 184 and hydroquinone were compounded at each rate described in Table 1, mixed by three rolls and various kinds of ink were obtained whose tack values were measured by an Inkometer (Toyo Seiki Co., Ltd.).

## COMPARATIVE EXAMPLE 1

Eighty parts by weight of the hydrogenated resin (I′) obtained in Example 1, 20 parts by weight of acrylic acid, 1.0 part by weight of paratoluene sulfonic acid and 0.1 part by weight of hydroquinone were reacted for esterification in benzene/MIBK in the same way as in Example 1 and the resin (No. 7) was obtained.

The resin (No. 7), trimethylolpropane triacrylate, carmine 6B, irugacure 184 and hydroquinone were compounded at each rate described in Table 1, and ink was obtained in the same way as in Examples 7 to 12.

COMPPARATIVE EXAMPLE 2

Seventy-five parts by weight of the resin (II) obtained in Example 4, 25 parts by weight of acrylic acid, 1.0 part by weight of paratoluene sulfonic acid and 0.1 part by weight of hydroquinone were reacted for esterification in the same way as in Example 1, and the resin (No. 8) was obtained.

Ink was obtained from the resin (No. 8) in the same way to make inks as in Comparative Example 1.

COMPARATIVE EXAMPLE 3

SP-1509 (Showa Kobunshi, epoxy acrylate prepolymer) to be used as a curing resin, trimethylolpropane triacrylate, carmine 6B, irgacure 184 and hydroquinone were compounded at rates described in Table 1, and ink was obtained in the same way as in Examples 7 to 12.

(The method for evaluation of inks)

[Curing Time]

Zero point six grams of ink was developed on carton paper using a R1 tester (Mei Seisakujo Corp.), quickly ultraviolet rays were irradiated under the condition of illuminance of 15 $mw/cm^2$ at 365 nm by a high pressure mercury lamp (Ushio Denki Corp., UVC-251) and then both-sides art paper was adhered under pressure by the R1 tester, and the irradiation time (second) which is necessary for ink not to adhere to the art paper was defined as curing time.

[Gloss of Original Ink and Emulsion Ink]

The gloss of printed matters after curing obtained above (gloss of original ink) was observed by the naked eye and was evaluated in accordance with below standards.

Also, 0.6 g of ink and water for wet were emulsified, after removing water, were developed on carton paper, were cured under the same condition as original ink and the gloss of emulsion ink was evaluated in the same way as original ink.

◎ : very excellent (the surface of printing is even smooth and very glossy)
O : excellent (the surface of printing was glossy)
Δ : intermediate between O and X
X : bad (the surface of printing is not glossy and the light cannot be reflected)

[Misting]

A paper was placed in front of the roll of an Inkometer (Toyo Seiki Corp.), ink was misted by revolving the roll to which ink was adhered under the condition of revolving number of 1200 rpm and the state of ink scattered on the paper was evaluated with the naked eye by below standards.

O : little (suitable for use)
X : much (unsuitable for use)

[Washing Property]

The washing property for the roll of Inkometer various kinds of ink were adhered to by lamp oil.

(Evaluation of properties of the case in using the resin for clear cured paint film)

EXAMPLES 13 to 18

Each of resins No. 1, No. 2, No. 3, No. 4, No. 5 and No. 6 obtained in each of Examples 1 to 6, and trimethylolpropane acrylate and phenoxyethyl acrylate, both of which were radical polymerizable diluents, were mixed in the ratios of 1:1:1. The mixture was coated on a steel board (bondelighte 40 treated board) and on a PMMA board (Mitsubishi rayon, acrylight 001) by using spinner (Kyoei Semiconductor Corp.) so that the thickness of the coated film would be 10 µm. And the paint film was cured by the ultraviolet rays under the below condition. The results were shown in Table 2.
Lamp : 80 w/cm x 1 lamp
Irradiation distance : 10 cm
Curing rate : 3 m/min.

COMPARATIVE EXAMPLES 4 to 6

Each of resins No. 7 and No. 8 obtained in Comparative Examples 1 and 2, and PES-169 (urethane acrylate, polymer System Co.) and radial polymerizable diluents consisting of trimethylolpropane acrylate and phenoxyethyl acrylate were treated in the same way as in Examples 13 to 18, and cured paint films were obtained. The results were shown in Table 2.

(Method of Evaluation of Clear Cured Paint Film)

[Pencil Hardness]

The pencil scratching test was carried out according to JIS K-5400.

[Adhesion]

According to JIS K-5400, the cross-cut test and the Sellotape peeling test were carried out. (The number of cross-cut parts which is not peeled)/(the number of cross-cut parts) was evaluated.

[Solvent resistance]

The surface of curing paint film was rubbed with gauze wetted with methyl ethyl ketone and the state of the surface was observed by the naked eye. It was evaluated by below standards.
O : No change. No clouding or no scratch on the surface of curing paint film was produced. The gloss did not lower.
X : Change was observed. Clouding or scratch on the surface of curing paint film was produced. The gloss lowered.

[Abrasion resistance]

The abrasion test of the curing paint film coated on a PMMA board was carried out by rotary abrasion tester (Toyo Seiki Corp.) in accordance with A.S.T.M. D-1044-78 and the extent of abrasion was evaluated by haze values (%) by hazemeter (Suga Shikenki Corp.)

Table 1

| No. | Ink composition | | | | | Ink evaluation | | | | |
|---|---|---|---|---|---|---|---|---|---|---|
| | Curing resin | Diluent*1 | Carmine 6B*2 | Irugacure*3 | Hydroquinone | Curing time (sec.) | Gloss of original ink | Gloss of emulsion ink | Misting | Washing property |
| Example 7 | 38 | 38 | 17 | 6 | 0.1 | 3 | ◎ | ◎ | ○ | Excellent |
| 8 | 33 | 45 | 16 | 6 | 0.1 | 2 | ◎ | ◎ | ○ | Excellent |
| 9 | 28 | 49 | 16 | 6 | 0.1 | 1 | ○ | ○ | ○ | Excellent |
| 10 | 39 | 37 | 17 | 7 | 0.1 | 3 | ◎ | ◎ | ○ | Excellent |
| 11 | 39 | 39 | 16 | 6 | 0.1 | 2 | ◎ | ◎ | ○ | Excellent |
| 12 | 36 | 40 | 17 | 7 | 0.1 | 3 | ◎ | ◎ | ○ | Excellent |
| Comparative Example 1 | 51 | 25 | 17 | 7 | 0.1 | 8 | ○ | ○ | X | Excellent |
| 2 | 53 | 23 | 17 | 7 | 0.1 | 8 | ○ | ○ | X | Excellent |
| 3 | 47 | 29 | 17 | 7 | 0.1 | 3 | ○ | Δ | X | Bad |

*1 Trimethylolpropane triacrylate
*2 Azo-type red pigment
*3 Sensitizer: Ciba-Geigy Corporation

Table 2

| No. | Pencil hardness | Solvent resistance | Abrasion resistance | Adhesion | |
|---|---|---|---|---|---|
| | | | | PMMA board | Steel board |
| Example 13 | 5H | O | 13 | 100 | 100 |
| 14 | 6H | O | 12 | 100 | 100 |
| 15 | 7H | O | 15 | 100 | 100 |
| 16 | 6H | O | 12 | 100 | 100 |
| 17 | 6H | O | 15 | 100 | 100 |
| 18 | 6H | O | 18 | 100 | 100 |
| Comparative Example 4 | 4H | O | 30 | 100 | 100 |
| 5 | 4H | O | 25 | 100 | 100 |
| 6 | HB | X | 48 | 0 | 0 |

When the curing resin of the present invention is used for binders for printing inks, as shown in Examples 7 to 12 printed matters having higher gloss than ones using conventional curing oligomer can be obtained and misting at the time of print is less. And that an excellent printing ink having a rapid curing property can be obtained.

Also, when it is used for clear varnish, as shown in Examples 13 to 18, the extremely excellent cured film having excellent hardness and abrasion resistance, and that having, also, excellent adhesion which is different from the conventional curing oligomer was obtained.

As described above, the resin produced according to the present invention has excellent properties for a curing resin and can be employed for wide range of use.

## Claims

1. A curing resin obtainable by polymerizing with heating 100 parts by weight of at least one material (component A) selected from a five-membered cyclic compound having conjugated double bonds of general formula:

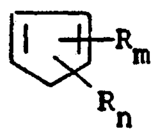

wherein R represents alkyl having 1 to 3 carbon atoms, and m and n each is 0 or an integer of 1 to 6 and $m+n = 6$,
and a Diels-Alder addition product thereof, 0 to 50 parts by weight of an aromatic compound (component A′) having at least one polymerizable carbon-carbon double bond and 2 to 120 parts by weight of a compound (component B) having at least one polymerizable carbon-carbon double bond and at least one hydroxy group, reacting the resulting cyclopentadiene resin (R1) having hydroxy groups and/or resin (R1′) having hydroxy groups obtained by selective hydrogenation of only the double bonds in the said resin (R1) with a polyisocyanate compound (component C) at an equivalent ratio of isocyanate groups in component C to hydroxy groups in resin R1 and/or R1′ of 0.02/1 to 0.95/1, and esterifying the resulting resin (R2) with an $\alpha,\beta$-unsaturated carboxylic acid (component D) at an equivalent ratio of carboxyl groups in the component D to hydroxy groups in the resin (R2) of 0.1/1 to 1.1/1.

2. A resin according to claim 1 in which component A is cyclopentadiene, methylcyclopentadiene, dicyclopentadiene, a cyclopentadiene-methylcyclopentadiene-Diels-Alder codimerization product or tricyclopentadiene.

3. A resin according to claim 1 or 2 in which component B is an unsaturated alcohol, unsaturated dihydric alcohol or hydroxyalkyl (meth)acrylate of 3 to 22 carbon atoms.

4. A resin according to claim 3 in which component B is allyl alcohol, 2-butene-1,4-diol, 2-hydroxyethyl acrylate or 2-hydroxyethyl methacrylate.

5. A resin according to any one of the preceding claims in which component C is an aliphatic polyisocyanate, alicyclic polyisocyanate, heterocyclic polyisocyanate or aromatic polyisocyanate.

6. A resin according to claim 5 in which component C is hexamethylene diisocyanate, trylene diisocyanate, diphenylmethane diisocyanate or isophorone diisocyanate.

7. A resin according to any one of the preceding claims in which component D is acrylic acid, methacrylic acid, crotonic acid, sorbic acid or cinnamic acid.

8. A curing resin composition comprising 90 to 5 parts by weight of a curing resin as claimed in any one of claims 1 to 7 and 10 to 95 parts by weight of a diluent.

9. Use of a resin or resin composition as claimed in any one of the preceding claims as a binder for a printing ink or paint.